# EUROPEAN PATENT APPLICATION

(11) **EP 1 275 297 A1**
(43) Date of publication of application: **15.01.2003**
(21) Application number: 01310543.2
(22) Date of filing: 17.12.2001
(51) Int. Cl.: A01K 1/01

(54) **Solid-liquid separating apparatus**

(30) Priority: 26.06.2001 US 888401
(71) Applicant: 625606 B.C. Ltd., Vancouver, British Columbia V6M 4B9 (CA)
(72) Inventor: Chen, Shih Ming, Abbotsford, British Columbia V2T 3L5 (CA)
(74) Representative: Henderson, Wendy Agnes

(57) **Abstract**

The present invention is disclosed the solid-liquid separating apparatus. The solid-liquid separating apparatus mainly comprises a housing (1), a continuous conveying means (2), a squeeze assembly (3) and a continuous cleaning means (4). The housing (1) comprises a separation net (7) having two ends, an upper chamber having an inlet tube (12) and a lower chamber having an out let tube (15). The continuous conveying means (2) and the continuous cleaning means (4) run from one end of the separation net (17) to the other. The continuous conveying means (2) comprises a pair of drive chains(42) and a plurality of conveying members (23) each having a scraper (24) and a brush (43) mechanically attached to the dirve chains. The squeeze assembly comprises a collecting chamber (31) and a cylinder (32) thereof provided with a spiral groove (33), and is positioned at the end of the separation net (17).

## Description

### Background of the Invention

### 1. Field of the Invention

The present invention is related to a solid-liquid separating apparatus and more particularly to an auxiliary separation system used to facilitate filtering operation of a separation net in order to improve solid-liquid separation efficiency.

### 2. Description of the Related Art

Many of manure separation devices, well known in the art, exist a need for improved the efficiency of separation speed and reduced the cost of operation. The device is directed to convey and collection of manure by use of a continuous conveyor belt system and it is also common practice to employ a motor to drive the continuous conveyor belt system.

U.S. Patent No. 5,832,873 discloses a solid and liquid separation machine, as shown in FIG. 4. The machine for separating and dehydrating droppings includes a body 90 having two ends respectively provided with a rotation shaft 91 and a drive gear 92. One rotation shaft 91 is driven by a motor 93 to rotate the drive gear 92. Each scraper 97 is secured on the chain 94 by a fixing plate 95 and a locking plate 96, for carrying upward the solids contained in the wastewater, and squeezing the water contained in the solids. The front and rear section of the bottom of the body 90 is provided with a separation net 98 and a bottom plate 99 respectively. The squeezed solids are conveyed upward relative to the body 90 by the scraper 97 and then drops into a collecting tank.

When the solids are conveyed upward by the scraper 97 on the bottom net 98, some scarped solids will obstruct meshes of the bottom net 98 that retains the wastewater contained in the solids within the body 90. In addition, when ambient temperature is 0°C, the liquid of the wastewater contained in the solids is frozen in the bottom net. The wastewater cannot, therefore, pass through the bottom net 98. Accordingly, they remained needs for an effective cleaning system to the bottom net 98 during separating process.

Applicant's U.S. Pat. Appl. serial No. **/***,*** filed on June 26, 2001 discloses "Solid and Liquid Separation Device". The device includes a housing provided with a heater applied to heat liquid contained in the housing. A filter net layer separates the housing into an upper space and a lower space. A conveying assembly includes a plurality of connecting rods each having a scraper and a brush. The scraper contacts the filter net layer for conveying solids and the brush clean the scraped solids obstructed the filter net layer during the scraper sliding along the filter net layer. A squeeze assembly comprises a cylinder provided with a threaded rod employed to axially move collection of the solids. A liquid spraying assembly comprises a pump and a plurality of nozzles connected therewith which sprays to clean the mud remained on the bottom net. However, the considerable water used to clean the bottom net substantially increases cost of operation. At the same time, the conveying assembly requires a conveying speed limit which is approximately proportional to water speed of the liquid spraying assembly.

Accordingly, although the above-mentioned concept offered numerous substantial advantages in operating ease as well as increased reliability, at least in theory, there exists a need for an effective auxiliary separation system to facilitate filtering operation of a separation net..

The present invention intends to provide a continuous cleaning means as well as an auxiliary separation system used to facilitate filtering operation of a separation net in such a way to mitigate and overcome the above problem.

### Summary of the Invention

The primary objective of this invention is to provide a solid-liquid separating apparatus including an auxiliary separation system used to facilitate filtering operation of a separation net in order to effectively increase operation speed.

The secondary objective of this invention is to provide the solid-liquid separating apparatus including a continuous cleaning means as well as an auxiliary separation system used to facilitate filtering operation of a separation net in order to reduce cost of the cleaning operation.

The present invention is the solid-liquid separating apparatus. The solid-liquid separating apparatus mainly comprises a housing, a continuous conveying means, a squeeze assembly and a continuous cleaning means. The housing comprises a separation net having two ends, an upper chamber having an inlet tube and a lower chamber having an out let tube. The continuous conveying means and the continuous cleaning means run from one end of the separation net to the other. The continuous conveying means comprises a pair of drive chains and a plurality of conveying members each having a scraper and a brush mechanically attached to the drive chains. The squeeze assembly comprises a collecting chamber and a cylinder thereof provided with a spiral groove, and is positioned at the end of the separation net.

Other objectives, advantages and novel features of the invention will become more apparent from the following detailed description and the accompanying drawings.

### Brief Description of the Drawings

The present invention will now be described in detail with reference to the accompanying drawings herein:
FIG. 1 is an exploded perspective view of the solid-liquid separating apparatus in accordance with an embodiment of the present invention;
FIG. 2 is a cross-sectional view of the solid-liquid separating apparatus illustrating operation of a continuous conveying means and a continuous cleaning means;
FIG. 3 is a cross-sectional view, taken along 3-3 in FIG. 2, of the solid-liquid separating apparatus in accordance with the embodiment of the present invention;
FIG. 4 is an enlarged view in FIG. 2 of the solid-liquid separating apparatus in accordance with the embodiment of the present invention; and

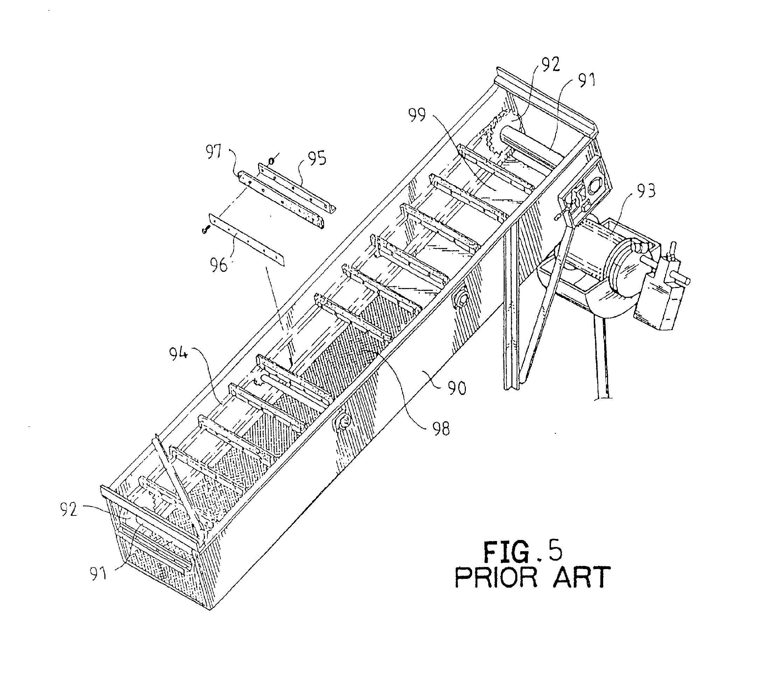

FIG. 5 is an exploded perspective view of a device for separating and dehydrating droppings in accordance with U.S. Patent No. 5,832,873.

### Detailed Description of the Invention

Referring now to the drawings, there is an embodiment of the present invention shown therein, which includes generally a housing and a mechanical construction mounted therein.

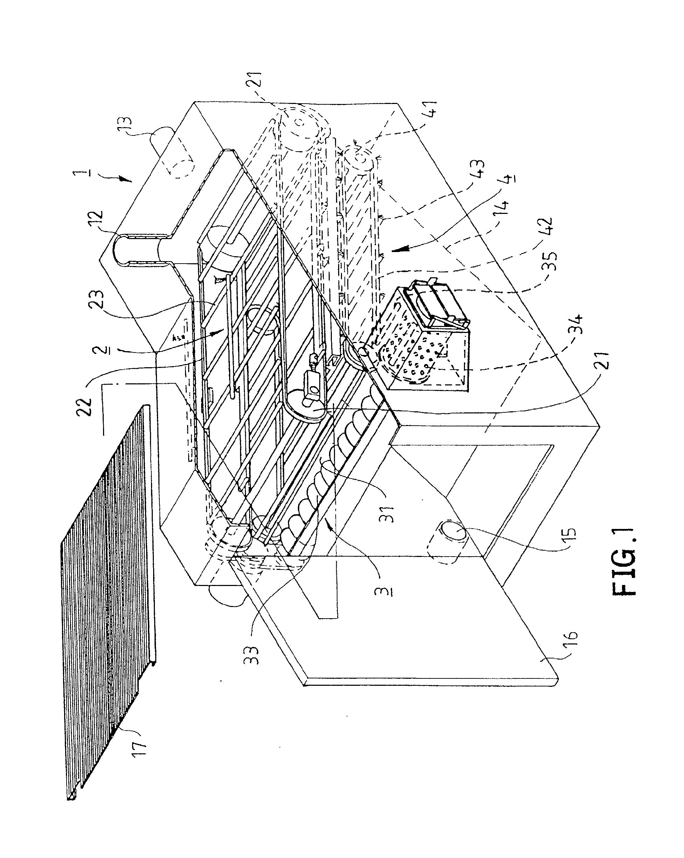

Referring initially to FIG. 1, a solid-liquid separating apparatus in accordance with the present invention generally includes a housing designated as numeral 1, a continuous conveying means designated as numeral 2, a squeeze assembly designated as numeral 3 and a continuous cleaning means designated as numeral 4. The housing 1 is formed from an inclined top wall, side walls and an bottom wall to construct a vessel and comprises an inclined bottom plate 14 and a separation net 17 extended in a directional inclination from the bottom wall. The housing 1 further comprises an overflow tube 13 for releasing overflow of manure and a door 16 communicated with the exterior.

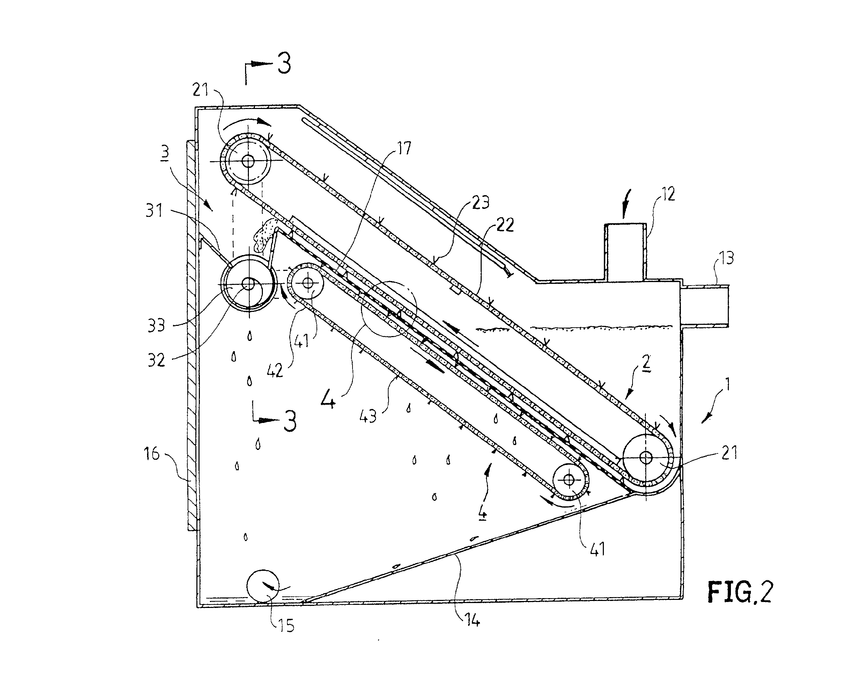

Construction of the solid-liquid separating apparatus shall be described in detail, referring now to FIGS. 1 and 2. The separation net 17 separates the interior of the housing 1 into the upper chamber defined by the upper side of the separation net 17, the inclined top wall and the side walls, and the lower chamber defined by the lower side of the separation net 17, side walls and the bottom wall. The upper chamber and the lower chamber have an inlet tube 12 for inputting inflow of manure and an outlet tube 15 for outputting outflow of wastewater respectively. The continuous conveying means 2 and the continuous cleaning means 4 is mounted parallel with an upper side and a lower side of the separation net 17 respectively. The continuous conveying means 2 and the continuous cleaning means 4 are wounded around and driven by two co-rotational reels 21 and 41 positioned at two ends of the separation net 17. The continuous conveying means 2 and the continuous cleaning means 4 run from one end of the separation net 17 to the other. The continuous conveying means 2 comprises a pair of drive chains 22 and a plurality of conveying members 23 each having a scraper 24 and a brush 25 mechanically attached to the drive chains 22. The squeeze assembly 3 comprises a collecting chamber 31 and a cylindrical rod 32 provided with a spiral 33 rotatably mounted therein. The squeeze assembly 3 is positioned at the high end of the separation net 17 proximate the inclined top wall. The squeeze assembly 3 further comprises a filter tube 34 and a plurality of heaters 35 mechanically mounted therewith and a passage thereto extending into the collecting chamber 31. The continuous cleaning means 4 comprises a pair of drive chain 42 and a plurality of brushes 43 connected therewith.

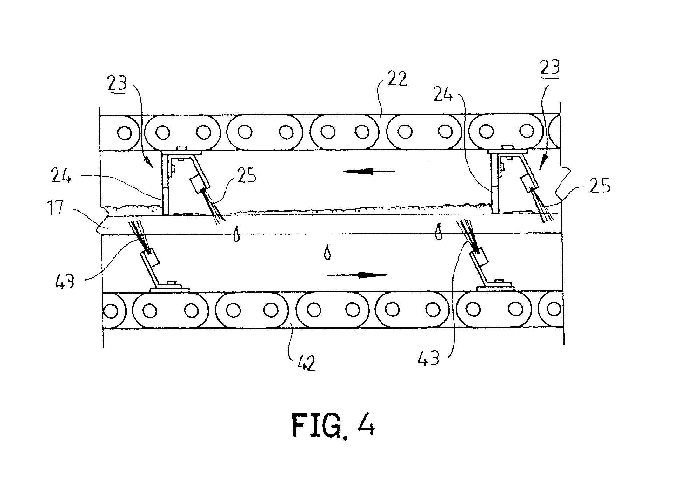

Mechanical operation of the continuous conveying means 2 and the continuous cleaning means 4 shall now be described with reference to FIGS. 2, 3 and 4. In operation, the continuous conveying means 2 cycles at a predetermined speed between the two co-rotational reels 21 so that the scraper 24 and the brush 25 runs along the upper side of the separation net 17. The scrapers 24 drive the solid-liquid from the lower end to the upper end of the separation net 17 in the upper chamber and the brushes 25 synchronously sweep the upper side of the separation net 17 in order to allow the waste water to drop into the lower chamber. Meanwhile, the continuous cleaning means 4 as well as an auxiliary separation system facilitates filtering operation of the separation net 17 in order to improve solid-liquid separation efficiency. The continuous cleaning means 4 also cycles at a predetermined speed between the two co-rotational reels 41 so that the brush 43 runs along the lower side of the separation net 17. The brushes 43 of the continuous cleaning means 4 cleans the separation net 17 during operation in addition to the brushes 25 does.

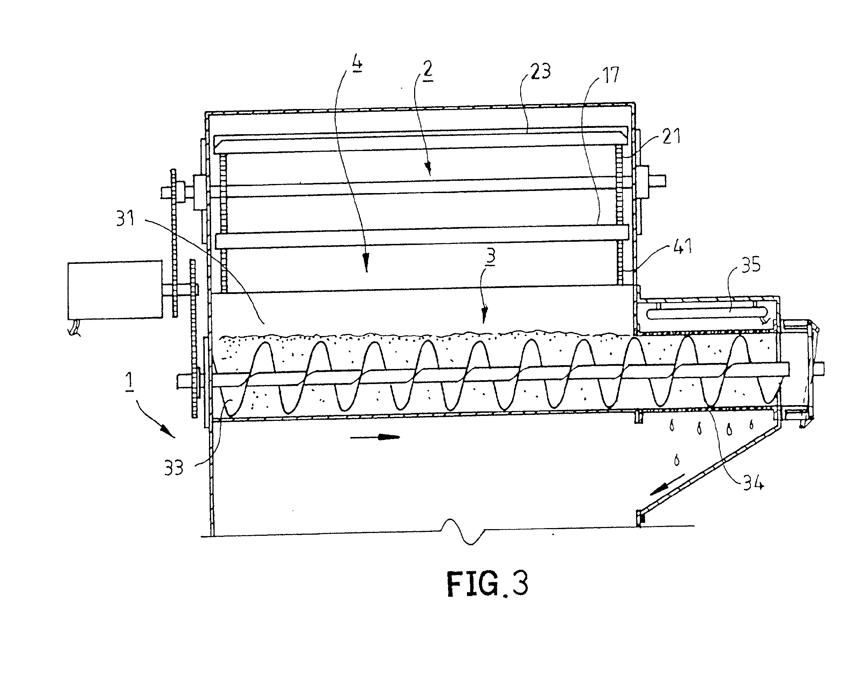

Operation of the squeeze assembly 3 shall now be described with reference to FIGS. 2 and 3. The collecting chamber 31 of the squeeze assembly 3 is structurally connected with a door which is used to output squeezed solids to the exterior of the housing 1. A motor electrically rotates the cylindrical rod 32 that axially drive the material contained in the collecting chamber 31 and the filter tube 34. The heater 35 heats the squeezed material which passing through the filter tube 34 that the liquid remained in the squeezed material can drop from the filter tube 34.

Separating operation of the entire solid-liquid separating apparatus shall now be described with reference again to FIGS. 2 and 3. Solid-liquid material is input through the inlet tube 12 into the upper chamber and driven by the continuous conveying means 2 from the low end to the high end of the separation net 17. When the solid-liquid material passes through the separation net 17, the wastewater is filtered and the solid remainder is continuously conveyed to the collecting chamber 31. At the same time, the cylindrical rod 32 mechanically squeezes the solid remainder and outputs the squeezed material through the filter tube 34 to the door at the end. By contrast, the dropped wastewater gathers on the inclined bottom plate 14 in the lower chamber and can outflow through the outlet tube 15 thereof at the end. It is important to note that the brushes 25 and 43 continuously sweep the separation net 17 in a way that it facilitates and ensures the wastewater dropping. The auxiliary separation system of the present invention facilitates filtering operation of a separation net 17 in order to improve solid-liquid separation efficiency and reduce cost of the cleaning operation.

Although the invention has been described in detail with reference to its presently preferred embodiment, it will be understood by one of ordinary skill in the art that various modifications can be made without departing from the spirit and the scope of the invention, as set forth in the appended claims.

## Claims

1. A solid-liquid separation apparatus including:
a housing being separated into an upper chamber and a lower chamber and comprising a separation net;
a continuous conveying means comprising a plurality of conveying member used to convey the solid-liquid material along an upper side of the separation net and
wastewater contained in the solid-liquid material drop through the separation net into the lower chamber;
a squeeze assembly comprising a collecting chamber and a cylindrical rod with a spiral which axially drives a solid remainder of the solid-liquid material; and
a continuous cleaning means comprising a plurality of brushes running along an lower side of the separation net and being adapted to clean it to facilitate filtering operation.

2. The solid-liquid separation apparatus as defined in Claim 1, wherein the housing comprises an inlet tube and an outflow tube provided on the upper chamber.

3. The solid-liquid separation apparatus as defined in Claim 1, wherein the housing comprises an outlet tube provided on the lower chamber.

4. The solid-liquid separation apparatus as defined in Claim 1, wherein the housing further comprises an inclined bottom plate and a separation net extended in a directional inclination from a bottom wall.

5. The solid-liquid separation apparatus as defined in Claim 1, wherein the conveying member comprises a scraper and a brush.

6. The solid-liquid separation apparatus as defined in Claim 1, wherein the continuous conveying means comprises a pair of drive chain wounded around two co-rotational reels.

7. The solid-liquid separation apparatus as defined in Claim 1, wherein the collecting chamber of the squeeze assembly is structurally connected with a door which is used to output squeezed solids of the solid-liquid material to an exterior of the housing.

8. The solid-liquid separation apparatus as defined in Claim 1, wherein the squeeze assembly further comprises a filter tube and a plurality of heater mechanically mounted therewith and a passage thereto extending into the collecting chamber.

9. The solid-liquid separation apparatus as defined in Claim 1, wherein the continuous cleaning means comprises a pair of drive chain wounded around two co-rotational reels.

10. The solid-liquid separation apparatus as defined in Claim 1, wherein the housing further comprises a door communicated with an exterior.
